(19)

Europäisches
Patentamt
European
Patent Office
Office européen
des brevets

(11) **EP 3 136 213 A1**

(12) **EUROPEAN PATENT APPLICATION**
published in accordance with Art. 153(4) EPC

(43) Date of publication:
**01.03.2017 Bulletin 2017/09**

(21) Application number: **14892780.9**

(22) Date of filing: **24.09.2014**

(51) Int Cl.:
*G06F 3/0488* (2013.01)

(86) International application number:
**PCT/CN2014/087333**

(87) International publication number:
**WO 2015/176447 (26.11.2015 Gazette 2015/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.05.2014 CN 201410223541**

(71) Applicant: **ZTE Corporation
Shenzhen, Guangdong 518057 (CN)**

(72) Inventor: **CUI, Xianming
Shenzhen
Guangdong 518057 (CN)**

(74) Representative: **Benson, Christopher
HGF Limited
4th Floor, Merchant Exchange
17-19 Whitworth Street West
Manchester M1 5WG (GB)**

(54) **METHOD AND DEVICE FOR FACILITATING OPERATION OF TERMINAL**

(57)    Provided is a method and device for facilitating operation of terminal, relating to the technical field of mobile phones based on Google Android operation system. The method includes: detecting a click coordinate position, used for facilitating an operation of the user, clicked by a user on a screen after a function for facilitating an operation is enabled, and determining the click coordinate position as a point coordinate position for facilitating an operation; judging, according to the size of UI currently started by the user, whether the UI needs to be displayed in full screen or to be displayed in non-full screen; moving the UI towards the point coordinate position for facilitating an operation if it's judged that the UI needs to be displayed in non-full screen; displaying the UI on the entire screen if it's judged that the UI needs to be displayed in full screen. The embodiment of present disclosure provides a method for moving the UI in non-full screen to the point for facilitating an operation determined by users, for convenient operation of users and avoiding the slide damage to a terminal caused by moving an operating finger within a large range.

detecting a click coordinate position, used for facilitating an operation of the user, clicked by a user on the screen after a function for facilitating an operation is enabled, and determining the click coordinate position as a point coordinate position for facilitating an operation — S1

judging, according to the size of UI currently started by the user, whether the UI needs to be displayed in full screen or needs to be displayed in non-full screen — S2

moving the UI towards the point coordinate position for facilitating an operation if it's judged that the UI needs to be displayed in non-full screen — S3

displaying the UI on the entire screen if it's judged that the UI needs to be displayed in full screen — S4

FIG. 1

EP 3 136 213 A1

**Description**

**Technical Field**

The disclosure relates to a mobile phone technology field and in particular to a method, device for facilitating an operation of a terminal.

Background

Android developed by Google from Linux kernel open source operation system and launched in the market on October 2008 after establishing the Open Handset Alliance on November 2007 has been used widely on mobile phone terminals and Pad tablet computer now. Android is really the first open and complete mobile terminal operation system for mobile terminals without any exclusive right for prohibiting mobile industry innovation like before. Many world famous enterprises such as HTC, ZTE, Motorola and Samsung have provided Android mobile phone products, Pad tablet computers, netbooks and the upward trend of market share is very strong.

The development environment of Android is more open than iphone, WinMobile OS's on the foundation of complete open resource. And Android provides a platform to develop innovative software for every developer. Google has already developed many ready-made application software and on-line services and offered whole development environment, a simulator, a document, help and an example which depends on Eclipse. At the same time, Android can cooperate closely with Gmail, Google map, Google search and other Google service to provide more convenient Sync and network service for users, which has become one of the successful models of cloud computing mode. Android Market served as a platform to download and release Android application provides convenient ways to release and download application for developers and users.

Just the same as other operation system, a pop-up will appear to remind users how to operate next step when users make some special choices to operate, such as reminding for installing application, reminding for confirming to delete some information. The pop-up is usually non-fully displayed on a terminal screen so that it requires users to move fingers closely to the pop-up when choosing operation, and next step will be performed accurately. For example, users click "Confirmation", "Yes" or "No". But it's so inconvenient to operate for users who hold a mobile terminal with a single hand. One reason is that they have to protect the mobile terminal from sliding down. For other hand it's really not easy to operate exactly on pop-up by a large margin from up to bottom or from left to right. Specially, the dilemma is in existence for Android system terminals with large screen which are popular in the market, such as mobile phone with 4.5 inches, 5 inches, 5.5 inches, 6 inches, 7 inches, even including the Pad tablet computer with 9 inches, 10 inches or 11 inches, 12 inches, and during the process of operation, fingers move too much and fingers need to seek operation points, resulting in terminals damaged due to sliding down and inconvenient operations.

**Summary**

The purpose of the present disclosure is to provide a method and device for facilitating operation of terminal so as to solve the problem of inconvenient operation and the slide damage to a terminal caused by moving an operating finger within a large range, for the User Interface, UI, displayed in non-full screen.

According to one aspect of the present disclosure, it provides a method for facilitating operation of terminal which includes:

detecting a click coordinate position, used for facilitating an operation of the user, clicked by a user on a screen after a function for facilitating an operation is enabled, and determining the click coordinate position as a point coordinate position for facilitating an operation;

judging, according to the size of an operation interface (UI) currently started by the user, whether the UI needs to be displayed in full screen or needs to be displayed in non-full screen;

moving the UI towards the point coordinate position for facilitating an operation if it's judged that the UI needs to be displayed in non-full screen;

displaying the UI on the entire screen if it's judged that the UI needs to be displayed in full screen.

Preferably, obtaining a click coordinate position which is used for facilitating an operation of the user after a function for facilitating an operation is enabled and a clickable area of user on screen is detected;

determining the obtained click coordinate position as a point coordinate position for facilitating an operation, and recording.

Preferably, obtaining pixel of the operation interface (UI) currently started by the user, and comparing the obtained pixel with preset full-screen pixel;

determining the UI needs to be displayed in non-full screen if the obtained pixel is smaller than the full-screen pixel or determining the UI needs to be displayed in full screen if the pixel obtained is not smaller than the full-screen pixel.

Preferably, if it's judged that the UI needs to be displayed in non-full screen, then obtaining a central point coordinate position of the UI;

moving the UI towards the point coordinate position for facilitating an operation according to the central point coordinate position.

Preferably, the step of moving the UI towards the point coordinate position for facilitating an operation according to the central point coordinate position, includes:

calculating a distance value from the central point to the point for facilitating an operation according to the central point coordinate position and the point coordinate position for facilitating an operation;

moving the UI towards the point coordinate position for facilitating an operation according to the distance value and making the central point and the point for facilitating an operation coincide.

According to another aspect of the present disclosure, it provides a device for facilitating operation of terminal which includes:

a point for facilitating an operation module, which is configured to detect a click coordinate position, used for facilitating an operation of a user, clicked by the user on a screen after a function for facilitating an operation is enabled, and determine the click coordinate position as a point coordinate position for facilitating an operation;

a judging module, which is configured to judge, according to the size of an operation interface (UI) currently started by the user, whether the UI needs to be displayed in full screen or needs to be displayed in non-full screen;

a non-full screen module, which is configured to move the UI towards the point coordinate position for facilitating an operation if it's judged that the UI needs to be displayed in non-full screen;

a full screen module, which is configured to display the UI on the entire screen if it's judged that the UI needs to be displayed in full screen.

Preferably, the point for facilitating an operation module includes:

a obtaining sub-module, which is configured to obtain a click coordinate position which is used for facilitating an operation of the user after a function for facilitating an operation is enabled and a clickable area of user on screen is detected;

a recording sub-module, which is configured to determine the obtained click coordinate position as a point coordinate position for facilitating an operation, and record the point coordinate position for facilitating an operation.

Preferably, the judging module includes:

a comparing sub-module, which is configured to obtain pixel of the operation interface (UI) currently started by the user, and compare the obtained pixel with preset full-screen pixel;

a determining sub-module, which is configured to determine the UI needs to be displayed in non-full screen if the pixel obtained is smaller than the full-screen pixel or determine the UI needs to be displayed in full screen if the pixel obtained is not smaller than the full-screen pixel.

Preferably, the non-full screen module includes:

a central point sub-module, which is configured to obtain a central point coordinate position of the UI if it's judged that the UI needs to be displayed in non-full screen;

a moving sub-module, which is configured to move the UI towards the point coordinate position for facilitating an operation according to the central point coordinate position.

Preferably, the moving sub-module includes:

a calculating unit, which is configured to calculate a distance value from the central point to the point for facilitating an operation according to the central point coordinate position and the point coordinate position for facilitating an operation;

a coinciding unit, which is configured to move the UI towards the point coordinate position for facilitating an operation according to the distance value and make the central point and the point for facilitating an operation coincide.

Compared with prior art, the embodiments of present disclosure have some great effects as following: the embodiments of present disclosure provides a method based on Android operation system to be inductive to the position of users' operation finger and makes the UI with non-full screen display move closely to the position of users' operation finger (which is namely the designated point for facilitating an operation), especially relating to trace and record specific coordinate position data of users' operation finger after moving, and make use of the position data to provide an active interaction method between the terminal UI and fingers to make operation object actively look for and move to operation finger so as to provide more facilitative operation for users, reducing inconvenient operations caused by a large moving scope of finger and avoiding the sliding damage to terminal because of a large moving scope of finger's operation.

**Brief Description of the Drawings**

Fig. 1 is a principle diagram of the method for facilitating an operation of a terminal according to the embodiment of the present disclosure.

Fig. 2 is a structure diagram for facilitating an operation of a terminal according to the embodiment of the present disclosure.

Fig. 3 is a flow diagram of the method for facilitating an operation of a terminal according to the embodiment of the present disclosure.

Fig. 4 is a schematic diagram of UI's position movement for facilitating an operation of a terminal according to the embodiment of the present disclosure.

Fig. 5 is a complete diagram of UI's position movement for facilitating an operation of a terminal according to the embodiment of the present disclosure.

**Detailed Description of the Embodiments**

The description on the preferred embodiments of the present disclosure would be made in detail in combination with the drawings, and it should be noted that the following preferred embodiments are only used for illustration and explanation of the present disclosure, not for limiting the present disclosure.

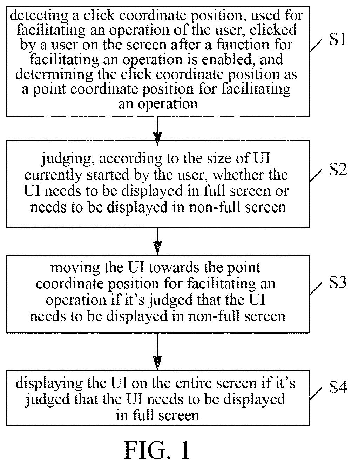

Fig. 1 is a principle diagram of the method for facilitating an operation of a terminal according to the embodiment of the present disclosure. As shown in Fig.1, the specific steps included:

Step 1: detecting a click coordinate position, used for facilitating an operation of the user, clicked by a user on a screen after a function for facilitating an operation is enabled, and determining the click coordinate position as a point coordinate position for facilitating an operation.

In Step 1, it is to obtain a click coordinate position used for facilitating an operation of the user by detecting a click area on the screen by a user after a function for facilitating an operation is enabled;

determine the obtained click coordinate position as a point coordinate position for facilitating an operation, and recording.

Step 2, it is to judge, according to the size of an operation interface (UI) currently started by the user, whether the UI needs to be displayed in full screen or needs to be displayed in non-full screen.

In Step 2, it is to obtain pixel of the operation interface (UI) currently started by the user, and compare the pixel obtained with preset full-screen pixel;

determine that the UI needs to be displayed in non-full screen if the pixel obtained is smaller than the full-screen pixel or determine that the UI needs to be displayed in full screen if the pixel obtained is not smaller than the full-screen pixel.

Step 3, it is to move the UI towards the point coordinate position for facilitating an operation if it's judged that the UI needs to be displayed in non-full screen.

In Step 3, it is to obtain a central point coordinate position of the UI if it's judged that the UI needs to be displayed in non-full screen;

move the UI towards the point coordinate position for facilitating an operation according to the central point coordinate position.

Preferably, the step of moving the UI towards the point coordinate position for facilitating an operation according to the central point coordinate position, includes:

calculating a distance value from the central point to the point for facilitating an operation according to the central point coordinate position and the point coordinate position for facilitating an operation;

moving the UI towards the point coordinate position for facilitating an operation according to the distance value and making the central point and the point for facilitating an operation coincide.

Step 4, it is to display the UI on the entire screen if it's judged that the UI needs to be displayed in full screen.

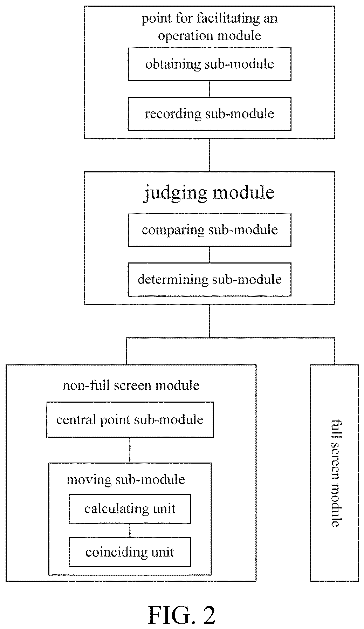

Fig. 2 is a structure diagram for facilitating an operation of a terminal according to the embodiment of the present disclosure. As shown in Fig.2, it includes: a point for facilitating an operation module, a judging module, a full screen module and a non-full screen module.

The point for facilitating an operation module is configured to detect a click coordinate position, used for facilitating an operation of the user, clicked by a user on a screen after a function for facilitating an operation is enabled, and determine the click coordinate position as a point coordinate position for facilitating an operation. Herein, the obtaining sub-module of the point for facilitating an operation module is configured to obtain a click coordinate position which is used for facilitating an operation of the user by detecting a clickable area of user on screen after a function for facilitating an operation is enabled. The recording sub-module of the point for facilitating an operation module is configured to determine the obtained click coordinate position as a point coordinate position for facilitating an operation, and record it.

The judging module is configured to judge, according to the size of UI currently started by the user, whether the UI needs to be displayed in full screen or needs to be displayed in non-full screen. Herein, a comparing sub-module of the judging module is configured to obtain pixel of UI currently started by the user, and compare the pixel obtained with preset full-screen pixel. A determining sub-module of the judging module is configured to determine the UI needs to be displayed in non-full screen if the pixel obtained is smaller than the full-screen pixel or determine the UI needs to be displayed in full screen if the pixel obtained is not smaller than the full-screen pixel.

The non-full screen module is configured to move the UI towards the point coordinate position for facilitating an operation if it's judged that the UI needs to be displayed in non-full screen. Herein, a central point sub-module of the non-full screen module is configured to obtain a central point coordinate position of the UI if it's judged that the UI needs to be displayed in non-full screen. A moving sub-module of non-full screen module is configured to move the UI towards the point coordinate position for facilitating an operation according to the central point coordinate position. A calculating unit of the moving sub-module is configured to calculate a distance value from the central point to the point for facilitating an operation according to the central point coordinate position and the point coordinate position for facilitating an operation. A coinciding unit of the moving sub-module is configured to move the UI towards the point coordinate position for facilitating an operation according to the distance value and make the central point and the point for facilitating an operation coincide.

The full screen module is configured to display the UI on the entire screen if it's judged that the UI needs to be displayed in full screen.

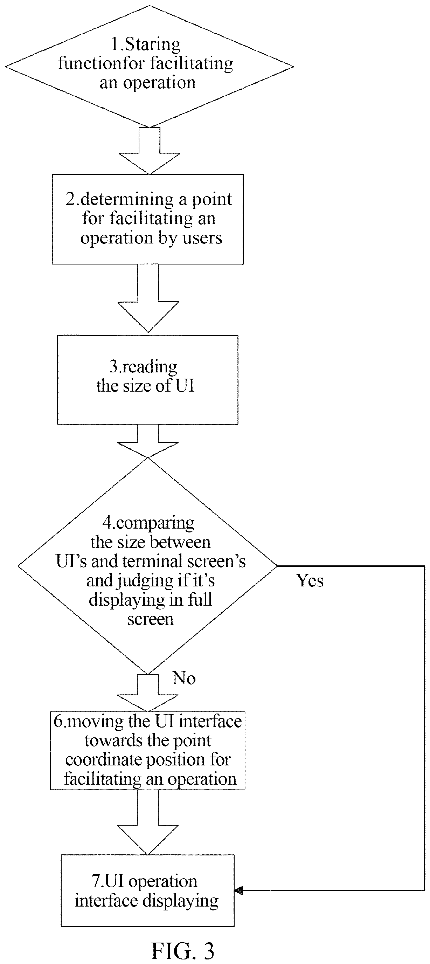

Fig. 3 is a flow diagram of the method for facilitating an operation of a terminal according to the embodiment of the present disclosure.

Step 1, it is to start a function for facilitating operation.

Step 2, the terminal reminds users to point out a point for facilitating an operation after a function for facilitating an operation is enabled and it takes a click coordinate position, clicked by user, as a point for facilitating an operation, then recording it.

Step 3, it is to obtain a pixel of the UI after the operation interface (UI) is started.

Step 4, it is to compare the size of UI with that of terminal screen and determine whether the UI needs to be displayed in full screen; if it needs to be displayed in non-full screen, proceeding to Step 5; if it needs to be displayed in full screen, proceeding to Step 6.

Step 5, if it needs to be displayed in non-full screen, it is to move the UI towards the point coordinate position for facilitating an operation, if it needs to be displayed in full screen, proceeding to Step 6.

Step 6, after moving the operation interface (UI) to an appropriate position, displaying is performed.

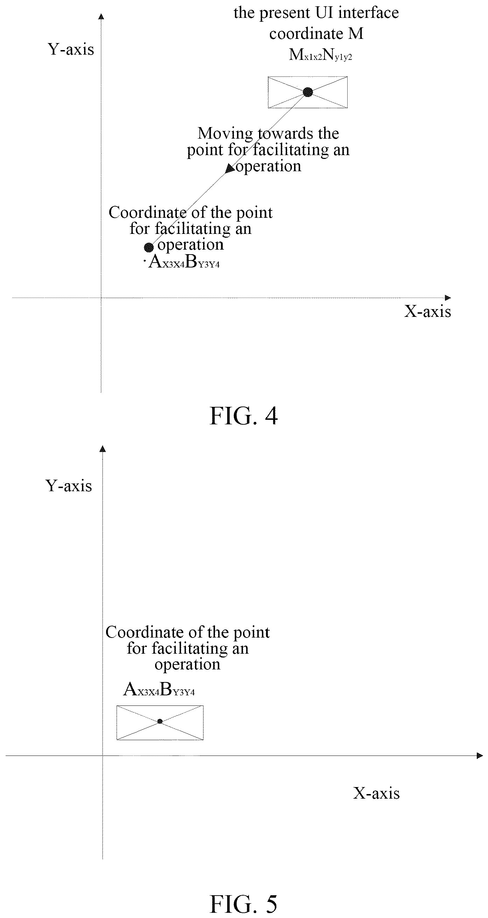

Fig. 4 is a schematic diagram of UI's position movement for facilitating an operation of a terminal according to the embodiment of the present disclosure. As shown in Fig. 4, the method includes:

First Step: adding a function menu for enabling or disabling the facilitating operation in Android operation system setting menu.

Herein, after adding a function menu for enabling or disabling the facilitating operation in Android operation system setting menu, users start up the method for facilitating operation, then starting the facilitating operation function. After starting the facilitating operation function, it will remind users to determine a point for facilitating an operation. Users can click any position on the screen so as to realize the facilitating operation. When users don't enable or disable the method for facilitating operation (the disabling state is in default), it will not start the facilitating operation function and implement according to the primary design scheme.

Second Step: it is to add a special service process 1 in Android operation system to record the position coordinate, on a terminal screen, of point for facilitating which is determined by users.

Herein, before adding a special service process 1 in Android operation system to record users' click position coordinate on a terminal screen, it'll remind users automatically to determine a point for facilitating operation on terminal screen after enabling the facilitating operation function. At the moment, users can select any position on terminal screen as a point for facilitating. Certainly, in order for the facilitating operation function, users can click the screen in a scope of a smallest finger movement distance, according to his operation habit, by holding a terminal with a left hand or right hand so as to move the operation interface (UI) to the coordinate determined by users and realize a more facilitating operation.

It is to add the special service process 1 in Android operation system to record a position parameter of the point, determined by users, for facilitating operation. The position parameter can be recorded as coordinate AB (Ax3x4, By3y4). When users determine a position by a finger operation, the special service process 1 will buffer the position with the form of AB (Ax3x4, By3y4). It will not record the above coordinate if disabling the facilitating operation function. Third Step: it is to add a special service process 2 in Android operation system to judge if the present operation interface (UI) needs to be displayed with full screen and record the coordinate position of the present operation interface (UI) in a form of MN (Mxlx2, Nyly2).

Herein, it is to add a special service process 2 in Android operation system to judge if the present operation interface (UI) needs to be displayed with full screen. The special service process 2 reads the size of present operation interface (UI) in real time (such as 480*854, width is 480 pixel, height is 854 pixel) and compares the parameter with the size of terminal screen (such as 720*1280, width is 720 pixel, height is 1280 pixel). If the size of present operation interface (UI) is smaller than terminal screen's, it judges to display with non-full screen, then the special service process 2 needs to read and record a coordinate position of the present operation interface (UI) in a form of MN (Mxlx2, Nyly2).

Fourth Step: it is to add a special service process 3 in Android operation system to adjust display position of the present operation interface (UI) and move the present operation interface (UI) towards the direction of point coordinate for facilitating an operation determined by users.

Herein, adjusting direction is to move the present operation interface (UI) towards the direction of point coordinate for facilitating an operation of users and the movement distance XY is an absolute value of a distance difference between the point for facilitating an operation and the present operation interface (UI). The coordinate of the present operation interface (UI) is MN (Mxlx2, Nyly2), the coordinate of the point for facilitating an operation is AB (Ax3x4, By3y4),

$$X=|Mx1x2-Ax3x4|, Y=|Ny1y2-By3y4|, \ XY=\sqrt{(|Mx1x2 - Ax3x4|^2 + |Ny1y2 - By3y4|^2)}.$$

Fifth Step: it is indicate users immediately to determine a point for facilitating an operation after enabling the facilitating operation function manually.

Sixth Step: the special service process 1 records a position coordinate of the point of facilitating an operation, determined by users, in a form of coordinate AB (Ax3x4, By3y4).

Seventh Step: the special service process 2 judges if the present operation interface (UI) is displayed in full screen and records a coordinate position of the present operation interface (UI) in a form of MN (Mxlx2, Nyly2).

Eighth Step: the special service process 3 is to adjust a displaying position of the present operation interface (UI), and the adjustment scheme is to move the present operation interface (UI) towards a direction of the point for facilitating an operation.

Herein, the movement distance XY is an absolute value of a distance difference between the point for facilitating an operation and the present operation interface (UI). The coordinate of the present operation interface (UI) is MN (Mxlx2, Nyly2), the coordinate of the point for facilitating an operation is AB (Ax3x4, By3y4), X=|Mx1x2-Ax3x4|, Y=|Ny1y2-By3y4|, so according to the Pythagorean theorem the

$$XY=\sqrt{(|Mx1x2 - Ax3x4|^2 + |Ny1y2 - By3y4|^2)}.$$

Ninth Step: Fig. 5 is a complete diagram of UI's position movement for facilitating an operation of a terminal according to the embodiment of the present disclosure. As shown in Fig. 5, it is to adjust the present operation interface (UI) to the coordinate position of a point for facilitating an operation coordinate position where users' finger is located.

The above contents are detailed description of present disclosure, however the present disclosure is not limited herein. Any amendments can be made according to the principle of the present invention and the amendments according to the present invention can be construed as being included in the protection scope of the present disclosure.

Industrial applicability

As mentioned above, the embodiments of the present disclosure have the following beneficial effects:

the embodiments of present disclosure provides a method based on Android operation system to be inductive to the position of users' operation finger and makes the UI with non-full screen display move closely to the position of users' operation finger (which is namely the designated point for facilitating an operation), especially relating to trace and record specific coordinate position data of users' operation finger after moving, and make use of the position data to provide an active interaction method between the terminal UI and fingers to make operation object actively look for and move to operation finger so as to provide more facilitative operation for users, reducing inconvenient operations caused by a large moving scope of finger and avoiding the sliding damage to terminal because of a large moving scope of finger's operation.

**Claims**

1. A method for facilitating an operation of terminal, comprising:

   detecting a click coordinate position, used for facilitating an operation of a user, clicked by the user on a screen after a function for facilitating an operation is enabled, and determining the click coordinate position as a point coordinate position for facilitating an operation;
   judging, according to the size of a User Interface, UI, currently started by the user, whether the UI needs to be displayed in full screen or needs to be displayed in non-full screen;
   moving the UI towards the point coordinate position for facilitating an operation if that the UI needs to be displayed in non-full screen is judged;
   displaying the UI on an entire screen if that the UI needs to be displayed in full screen is judged.

2. The method according to claim 1, wherein the step of detecting a click coordinate position, used for facilitating an operation of a user, clicked by the user on a screen after a function for facilitating an operation is enabled and determining the click coordinate position as a point coordinate position for facilitating an operation, comprises:

   obtaining the click coordinate position which is used for facilitating an operation of the user by detecting a clickable area of user on screen after a function for facilitating an operation is enabled;
   determining the obtained click coordinate position as a point coordinate position for facilitating an operation, and recording.

3. The method according to claim 1, wherein the step of judging, according to the size of a User Interface, UI, currently started by the user, whether the UI needs to be displayed in full screen or needs to be displayed in non-full screen, comprises:

   obtaining pixel of the UI currently started by the user, and comparing the obtained pixel with preset full-screen pixel;
   determining the UI needs to be displayed in non-full screen if the obtained pixel is smaller than the full-screen pixel or determining the UI needs to be displayed in full screen if the obtained pixel is not smaller than the full-screen pixel.

4. The method according to claim 1, wherein the step of moving the UI towards the point coordinate position for facilitating an operation if that the UI needs to be displayed in non-full screen is judged, comprises:

   obtaining a central point coordinate position of the UI if that the UI needs to be displayed in non-full screen is judged;
   moving the UI towards the point coordinate position for facilitating an operation according to the central point coordinate position.

5. The method according to claim 4, wherein the step of moving the UI towards the point coordinate position for facilitating an operation according to the central point coordinate position, comprises:

   calculating a distance value from the central point to the point for facilitating an operation according to the central point coordinate position and the point coordinate position for facilitating an operation;

moving the UI towards the point coordinate position for facilitating an operation according to the distance value and making the central point and the point for facilitating an operation coincide.

6. A device for facilitating an operation of terminal, comprising:

a point for facilitating an operation module, which is configured to detect a click coordinate position, used for facilitating an operation of a user, clicked by the user on a screen after a function for facilitating an operation is enabled, and determine the click coordinate position as a point coordinate position for facilitating an operation;

a judging module, which is configured to judge, according to the size of a User Interface, UI, currently started by the user, whether the UI needs to be displayed in full screen or needs to be displayed in non-full screen;

a non-full screen module, which is configured to move the UI towards the point coordinate position for facilitating an operation if that the UI needs to be displayed in non-full screen is judged;

a full screen module, which is configured to display the UI on the entire screen if that the UI needs to be displayed in full screen is judged.

7. The device according to claim 6, wherein the point for facilitating an operation module comprises:

a obtaining sub-module, which is configured to obtain a click coordinate position which is used for facilitating an operation of the user by detecting a clickable area of user on screen after a function for facilitating an operation is enabled;

a recording sub-module, which is configured to determine the obtained click coordinate position as a point coordinate position for facilitating an operation, and performs recording.

8. The device according to claim 6, wherein the judging module comprises:

a comparing sub-module, which is configured to obtain pixel of the UI currently started by the user, and compare the obtained pixel with preset full-screen pixel;

a determining sub-module, which is configured to determine the UI needs to be displayed in non-full screen if the obtained pixel is smaller than the full-screen pixel or determine the UI needs to be displayed in full screen if the obtained pixel is not smaller than the full-screen pixel.

9. The device according to claim 6, wherein the non-full screen module comprises:

a central point sub-module, which is configured to obtain a central point coordinate position of the UI if that the UI needs to be displayed in non-full screen is judged;

a moving sub-module, which is configured to move the UI towards the point coordinate position for facilitating an operation according to the central point coordinate position.

10. The device according to claim 9, wherein the moving sub-module comprises:

a calculating unit, which is configured to calculate a distance value from the central point to the point for facilitating an operation according to the central point coordinate position and the point coordinate position for facilitating an operation;

a coinciding unit, which is configured to move the UI towards the point coordinate position for facilitating an operation according to the distance value and make the central point and the point for facilitating an operation coincide.

detecting a click coordinate position, used for facilitating an operation of the user, clicked by a user on the screen after a function for facilitating an operation is enabled, and determining the click coordinate position as a point coordinate position for facilitating an operation — S1

judging, according to the size of UI currently started by the user, whether the UI needs to be displayed in full screen or needs to be displayed in non-full screen — S2

moving the UI towards the point coordinate position for facilitating an operation if it's judged that the UI needs to be displayed in non-full screen — S3

displaying the UI on the entire screen if it's judged that the UI needs to be displayed in full screen — S4

FIG. 1

```
┌─────────────────────────────────────────────┐
│        point for facilitating an            │
│           operation module                  │
│     ┌─────────────────────────────┐         │
│     │    obtaining sub-module      │         │
│     └─────────────────────────────┘         │
│                   │                          │
│     ┌─────────────────────────────┐         │
│     │    recording sub-module      │         │
│     └─────────────────────────────┘         │
└─────────────────────────────────────────────┘
                    │
┌─────────────────────────────────────────────┐
│             judging module                  │
│     ┌─────────────────────────────┐         │
│     │    comparing sub-module      │         │
│     └─────────────────────────────┘         │
│                   │                          │
│     ┌─────────────────────────────┐         │
│     │   determining sub-module     │         │
│     └─────────────────────────────┘         │
└─────────────────────────────────────────────┘
                    │
        ┌───────────┴──────────────┐
┌───────────────────────────────┐  ┌──────────┐
│    non-full screen module     │  │          │
│  ┌─────────────────────────┐  │  │  full    │
│  │ central point sub-module│  │  │  screen  │
│  └─────────────────────────┘  │  │  module  │
│             │                  │  │          │
│  ┌─────────────────────────┐  │  │          │
│  │   moving sub-module     │  │  │          │
│  │  ┌───────────────────┐  │  │  │          │
│  │  │ calculating unit  │  │  │  │          │
│  │  └───────────────────┘  │  │  │          │
│  │          │              │  │  │          │
│  │  ┌───────────────────┐  │  │  │          │
│  │  │  coinciding unit  │  │  │  │          │
│  │  └───────────────────┘  │  │  │          │
│  └─────────────────────────┘  │  │          │
└───────────────────────────────┘  └──────────┘
```

FIG. 2

FIG. 3

the present UI interface
coordinate M

$M_{x1x2}N_{y1y2}$

Moving towards the
point for facilitating an
operation

Coordinate of the point
for facilitating an
operation

$\cdot A_{X3X4}B_{Y3Y4}$

Y-axis

X-axis

FIG. 4

Y-axis

Coordinate of the point
for facilitating an
operation

$A_{X3X4}B_{Y3Y4}$

X-axis

FIG. 5

# INTERNATIONAL SEARCH REPORT

| International application No. |
|---|
| **PCT/CN2014/087333** |

### A. CLASSIFICATION OF SUBJECT MATTER

G06F 3/0488 (2013.01) i

According to International Patent Classification (IPC) or to both national classification and IPC

### B. FIELDS SEARCHED

Minimum documentation searched (classification system followed by classification symbols)

G06F, H04M

Documentation searched other than minimum documentation to the extent that such documents are included in the fields searched

Electronic data base consulted during the international search (name of data base and, where practicable, search terms used)

CNPAT; EPODOC; CNKI; WPI: manipulat+, no, display, central point, operation interface, pixel, one_handed, single, operat+, non, full, UI, mov+, convenient, finger, mobile, interface?, full screen, position, screen, hand, fingle, large, coordinat+

### C. DOCUMENTS CONSIDERED TO BE RELEVANT

| Category* | Citation of document, with indication, where appropriate, of the relevant passages | Relevant to claim No. |
|---|---|---|
| A | CN 103024156 A (GUANG DONG OPPO MOBILE TELECOMMUNICATIONS CO., LTD.), 03 April 2013 (03.04.2013), description, paragraphs [0017]-[0056] | 1-10 |
| A | CN 103218117 A (HUIZHOU TCL MOBILE COMMUNICATION CO., LTD.), 24 July 2013 (24.07.2013), description, paragraphs [0005]-[0014] | 1-10 |
| A | CN 103530049 A (TCL CORP.), 22 January 2014 (22.01.2014), description, paragraphs [0008]-[0018] | 1-10 |
| A | CN 102915201 A (GUANG DONG OPPO MOBILE TELECOMMUNICATIONS CO., LTD.), 06 February 2013 (06.02.2013), description, paragraphs [0021]-[0028] | 1-10 |
| A | CN 103425394 A (GUANG DONG OPPO MOBILE TELECOMMUNICATIONS CO., LTD.), 04 December 2013 (04.12.2013), description, paragraphs [0004]-[0023] | 1-10 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 January 2015 (09.01.2015) | **26 February 2015 (26.02.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HU, Ruixian** Telephone No.: (86-10) **61648249** |

Form PCT/ISA/210 (second sheet) (July 2009)

**EP 3 136 213 A1**

## INTERNATIONAL SEARCH REPORT
### Information on patent family members

| | International application No. |
|---|---|
| | **PCT/CN2014/087333** |

| Patent Documents referred in the Report | Publication Date | Patent Family | Publication Date |
|---|---|---|---|
| CN 103024156 A | 03 April 2013 | None | |
| CN 103218117 A | 24 July 2013 | WO 2014146389 A1 | 25 September 2014 |
| CN 103530049 A | 22 January 2014 | None | |
| CN 102915201 A | 06 February 2013 | None | |
| CN 103425394 A | 04 December 2013 | None | |

Form PCT/ISA/210 (patent family annex) (July 2009)